(19) Europäisches Patentamt
European Patent Office
Office européen des brevets

(11) **EP 0 743 092 B1**

(12) **EUROPÄISCHE PATENTSCHRIFT**

(45) Veröffentlichungstag und Bekanntmachung des Hinweises auf die Patenterteilung:
**01.09.1999 Patentblatt 1999/35**

(51) Int. Cl.$^6$: **B01J 23/42**, B01J 23/89, H01M 4/92

(21) Anmeldenummer: 96106596.8

(22) Anmeldetag: 26.04.1996

(54) **Platin-Aluminium-Legierungskatalysator für Brennstoffzellen und Verfahren zu dessen Herstellung**

Platinum-aluminium alloy-containing catalysts for fuel cell and process for their preparation

Catalyseurs à base d'un alliage platine-aluminium pour piles à combustible et procédé de préparation

(84) Benannte Vertragsstaaten:
AT BE CH DE DK ES FR GB GR IE IT LI LU NL PT SE

(30) Priorität: 13.05.1995 DE 19517598

(43) Veröffentlichungstag der Anmeldung:
20.11.1996 Patentblatt 1996/47

(73) Patentinhaber:
**Degussa-Hüls Aktiengesellschaft**
**45764 Marl (DE)**

(72) Erfinder:
• **Freund, Andreas, Dr.**
**63801 Kleinostheim (DE)**
• **Lehmann, Thomas, Dr.**
**63505 Langenselbold (DE)**
• **Starz, Karl-Anton, Dr.**
**63517 Rodenbach (DE)**
• **Heinz, Gerhard**
**63594 Hasselroth (DE)**
• **Schwarz, Robert**
**63517 Rodenbach (DE)**

(56) Entgegenhaltungen:
EP-A- 0 164 200        EP-A- 0 329 626
EP-A- 0 694 982        WO-A-91/19566
US-A- 4 186 110

**Beschreibung**

Die vorliegende Erfindung betrifft einen Platin-Aluminium-Legierungskatalysator und ein Verfahren zu dessen Herstellung für die Verwendung in Brennstoffzellen.

Platin- und insbesondere legierte Platinkatalysatoren auf elektrisch leitfähigen Kohlenstoffträgern werden als Elektrodenkatalysatoren für Anoden und/oder Kathoden in Brennstoffzellen, bevorzugt in phosphorsauren Brennstoffzellen (Phosphoric Acid Fuel Cell, PAFC) und Polymer-Electrolyt-Membranzellen (Polymer Electrolyte Membrane Fuel Cell, PEMFC), eingesetzt. Als typische Brennstoffe kommen auf der Kathodenseite Sauerstoff bzw. Luft und auf der Anodenseite Wasserstoff, Kohlenwasserstoffe, wie z. B. Methan, sauerstoffhaltige Kohlenwasserstoffe, wie z. B. Alkohole, oder deren Reformate zum Einsatz. Die Platinbeladung liegt im Bereich von 7 - 60 Gew.-%, vorzugsweise im Bereich von 10 - 35 Gew.-%, bezogen auf den Katalysator. In Abhängigkeit von der Elektrodenseite werden als elektrisch leitfähige Kohlenstoffträger Ruße, graphitierte Ruße, Graphit, Carbide und deren physikalischen Mischungen verwendet.

Es ist bekannt, daß die erzielte elektrische Leistung einer Phosphorsäurebrennstoffzelle im wesentlichen von der Aktivität des Kathodenkatalysators abhängt. Eine höhere Stromdichte bei vorgegebener Spannung sowie ein geringerer Spannungsabfall während der Standzeit des Brennstoffzellenkatalysators sind deshalb besonders erstrebenswert. Dadurch sinken die Kosten pro erzeugter Stromeinheit.

In der Patentliteratur werden verschiedene Verfahren zur Herstellung solcher Legierungskatalysatoren beschrieben. Die einzelnen Verfahren unterscheiden sich im wesentlichen durch die verwendeten Vorstufen für die Legierungskomponenten und durch die Art und Weise der Abscheidung der Legierungskomponenten auf dem leitfähigen Kohlenstoffträger. Die Art und Weise der Abscheidung beeinflußt die Feinteiligkeit der späteren Legierungspartikel auf dem Träger und damit die für den elektrochemischen Prozeß zur Verfügung stehende katalytisch aktive Metalloberfläche.

Nach Abscheidung auf dem Träger können die Legierungskomponenten naßchemisch oder durch eine Gasphasenreduktion reduziert werden.

Alle bekannten Verfahren beenden die Herstellung des Katalysators mit einer Calcinierung zwischen 200 und 1000° C in einer inerten oder reduzierenden Atmosphäre, wodurch die Reduktion der Legierungskomponenten abgeschlossen wird. Bei Verwendung einer inerten Atmosphäre muß diese abschließende Reduktion bei hohen Temperaturen durchgeführt werden, während in einer reduzierenden Atmosphäre geringere Temperaturen ausreichend sind.

Während der Abkühlung auf Raumtemperatur werden die zunächst als ungeordnete Legierung vorliegenden Legierungspartikel in eine weitgehend geordnete Legierung mit je nach Legierungszusammensetzung überwiegend kubisch flächenzentrierter oder überwiegend kubisch primitiver Raumgitterstruktur überführt (US 4,677,092). Dabei nehmen die Platinatome einerseits und die Atome der anderen Legierungskomponenten andererseits definierte Gitterplätze ein. Die resultierende Raumgitterstruktur kann als Übergitterstruktur aus zwei sich einander durchdringenden Raumgittern beschrieben werden, wobei das eine durch die Platinatome und das zweite durch die anderen Legierungskomponenten gebildet wird.

Die geordneten Legierungen zeichnen sich durch eine höhere Alterungsstabilität unter den stark korrosiven Bedingungen beim Betrieb in einer phosphorsauren (PA)-Brennstoffzelle (Betriebstemperatur 170 bis 200° C; 100 %ige Phosphorsäure als Elektrolyt) aus.

Die Elemente aus den Gruppen IB, IVB, VB, VIB, VIIB, VIII und IIIA werden in der Patentliteratur als geeignete Legierungselemente für Platin bezeichnet. Jedoch wurden nur bestimmte Legierungskombinationen in den jeweiligen praktischen Beispielen realisiert. Dazu gehören z. B. die binären Legierungen Pt-(Cr, V, Mn, Mo, W) [US 4,316,944], Pt-Co [JP 4-118960], Pt-Ta [JP 3-236160], Pt-Fe [EP 0 129 399], die ternären Legierungen Pt-Co-Cr [US 4,677,092], Pt-Ir-(Cr, Co, Fe) [US 5,013,618] und Pt-Fe-Co [US 4,794,054] sowie die quaternäre Legierung Pt-Fe-Co-Cu [EP 0 386 764].

Legierungskatalysatoren unter Verwendung von Legierungselementen aus der Gruppe IIIA werden in der JP 3-127459, der EP 0 450 849 und in der US 4,186,110 erwähnt.

In der JP 3-127459 werden jedoch nur binäre Legierungen Pt-V, Pt-Cr und Pt-Ni realisiert. Es werden relativ zum Platin hohe Mengen an diesen Übergangsmetallelementen eingesetzt, die durch eine nachfolgende Säurebehandlung teilweise bzw. weitgehend wieder herausgelöst werden. Durch diese Säurebehandlung weisen die Katalysatoren eine erhöhte Standzeit auf.

Die EP 0 450 849 beschreibt die in situ-Herstellung von Platinlegierungskatalysatoren mit einem oder mehreren Elementen der Gruppe IVB, VIB, VII, VIII, IB und IIIA des Periodensystems. Zur Abscheidung von Platin auf dem Kohlenstoffträger wird Hexachloroplatinsäure zu einer basischen Suspension des Trägermaterials in Wasser hinzugegeben. Die Legierungskomponenten werden als Chloride oder Nitrate der Suspension des nicht reduzierten Pt/C-Katalysators hinzugefügt. Die Legierungsbildung wird wie üblich durch thermische Behandlung unter Inertgasatmosphäre vollzogen. Eine vorgeschaltete naßchemische Reduktion oder Gasphasenreduktion ist optional.

In der EP 0 450 849 werden zwar Legierungskatalysatoren mit Elementen aus der Gruppe IIIA des Periodensystems beansprucht, insbesondere mit Gallium, entsprechende Anwendungsbeispiele werden jedoch nicht beschrieben.

Nur in der US 4,186,110 finden sich Beispiele mit einem Legierungskatalysator aus einer Platin-Aluminium-Legierung. Diese Patentschrift beschreibt die Herstellung von Legierungskatalysatoren aus Edelmetall und einem Metalloxid. Die so hergestellten Legierungskatalysatoren sollen eine erhöhte Aktivität gegenüber dem reinen Platinkatalysator aufweisen. Als hochschmelzende Metalle werden W, Al, Ti, Si, Ce, Sr und Kombinationen der vorstehenden Elemente verwendet. Diese hochschmelzenden Metalle werden vorzugsweise in Form von feinteiligen Oxiden wie z.B. den pyrogene Oxiden P-25 ($TiO_2$), Aerosil-380 ($SiO_2$), $Al_2O_3$-C und P-820 (Aluminiumsilikat), alle von der Firma Degussa, eingesetzt.

Die in der US 4,186,110 beschriebenen Platin-Aluminium-Katalysatoren haben sich in der Praxis nicht durchgesetzt, da mit der Entwicklung von ternären Platin-Cobalt-Chrom-Katalysatoren wesentlich aktivere und langzeitstabile Katalysatoren zur Verfügung standen. Auch läßt sich die beschriebene Aktivitätssteigerung von 110 % gegenüber monometallischen Platin-Katalysatoren gegenüber den heute zur Verfügung stehenden optimierten Platin-Katalysatoren nicht mehr bestätigen.

Aufgabe der vorliegenden Erfindung ist es, Katalysatoren mit platinhaltigen Legierungszusammensetzungen anzugeben, welche gegenüber dem Stand der Technik eine erhöhte Alterungstabilität sowie eine höhere Aktivität aufweisen.

Überraschenderweise wurden Platin-Aluminum-Legierungskatalysatoren gefunden, die gegenüber den bekannten Platin-Aluminium-Katalysatoren eine verbesserte Alterungsstabilität aufweisen, und die als Basis für die Herstellung von multimetallischen Legierungskatalysatoren mit ausgezeichneter Alterungsstabilität und Aktivität dienen können. Der Platin-Aluminium-Katalysator weist ein Atomverhältnis von Platin zu Aluminium zwischen 80 : 20 und 60 : 40 auf. Seine Legierungspartikel liegen auf dem Kohlenstoffträger in carbidisierter Form mit der Struktur des Platin-Aluminium-Carbids $Pt_3AlC_{0,5}$ vor.

Die erfindungsgemäßen Platin-Aluminium-Katalysatoren werden bevorzugt durch sequentielles Abscheiden von Platin und Aluminium auf den leitfähigen Kohlenstoffträger hergestellt. Als lösliche Vorstufen der Legierungskomponenten werden wasserlösliche Salze, bevorzugt Nitratsalze, eingesetzt.

Für die Hauptkomponente Platin des Legierungskatalysators wird als Vorstufe bevorzugt Platin(IV)nitrat verwendet. Platin(IV)nitrat ist kommerziell erhältlich und wird gewöhnlich aus Hexachloroplatinsäure hergestellt. Es enthält somit fertigungsbedingt noch geringe Chlorgehalte. Abgesehen von diesen geringen Chloranteilen hat die Verwendung von Nitratsalzen für alle Legierungskomponenten den Vorteil, daß der resultierende Katalysator nur noch geringe Chlorgehalte aufweist.

Zur Herstellung des Platin-Aluminium-Katalysators wird der leitfähige Kohlenstoffträger, z. B. graphitierter Ruß Vulcan® XC-72 von Cabot Corporation, in Wasser suspendiert und dann auf 70 bis 100, bevorzugt 80 bis 90°C, erwärmt. Zu dieser Suspension wird zunächst die Lösung der Platinvorstufe zugegeben. Zur vollständigen Ausfällung des Platins als schwerlösliches Hydroxid wird der pH-Wert der Suspension durch Zugabe einer Lauge, bevorzugt Natronlauge, auf einen Wert zwischen 8 und 10 angehoben. An die Ausfällung schließt sich die Reduktion der abgeschiedenen Platinverbindung z. B. mit Formaldehyd an, wodurch der pH-Wert der Suspension in den schwach sauren Bereich zwischen 4 und 6 erniedrigt wird.

Auf dieser noch in Suspension vorliegenden Katalysatorvorstufe kann sofort die Legierungskomponente Aluminium aufgebracht werden. Hierzu wird das Aluminium der Suspension in Form einer wäßrigen Lösung von z. B. Aluminiumnitrat zugefügt.

Zur Fällung des Aluminiums wird bevorzugt eine verdünnte Ammoniak-Lösung eingesetzt, mit der der pH-Wert der Suspension auf Werte im Bereich zwischen 6 und 8 angehoben wird. Auf diese Weise kann das Aluminium in feindisperser Form auf der platinhaltigen Katalysatorvorstufe vollständig abgeschieden werden. Die Verwendung von anderen Basen oder die simultane Abscheidung von Platin und Aluminium ist zwar auch möglich, führt jedoch zur unvollständigen Abscheidung bzw. zur Bildung von großen Legierungspartikeln.

Durch nachfolgende Calcinierung unter Inertgasatmosphäre oder reduzierender Atmosphäre wird eine Fixierung des Aluminiums auf dem Katalysatorträger erzielt. Zweckmäßigerweise werden hierzu Temperaturen im Bereich von 200 - 950°C eingesetzt. Bei Temperaturen von wenigstens 500°C findet eine stöchiometrische Umsetzung zu Platin-Aluminium-Carbid ($Pt_3AlC_{0,5}$) statt. Die Dauer der Umsetzung hängt von der gewählten Temperatur ab und liegt zwischen 0,5 und 5 Stunden. Die erfolgte Umsetzung kann durch Röntgenbeugung kontrolliert werden. Die Bildung der kubisch-flächenzentrierten Carbidphase ($a_0$ = 3.8930 Å) kann röntgenographisch nachgewiesen werden. Ihr Röntgenbeugungsdiagramm stimmt mit Literaturdaten der entsprechenden trägerlosen Verbindung überein (Z. Metallkde 52 (1961) 391). Die Gitterkonstante des reinen Platins beträgt dagegen $a_0$ = 3,923 Å. Die $Pt_3Al$-Legierung weist ein tetragonales Gitter auf. Seine Gitterkonstanten $a_0$ = 3,890 Å und $C_0$ = 3,830 Å liegen so nahe beieinander, daß das Röntgenbeugungsdiagramm nur die Struktur eines pseudokubischen Gitters mit der Gitterkonstanten $a_0$ = 3,86 Å aufweist.

Während also die $Pt_3Al$-Legierung gegenüber Platin eine Gitterkontraktion von 0,063 Å zeigt, beträgt diese Gitterkontraktion bei dem erfindungsgemäßen Platin-Aluminium-Carbid-Katalysator 0,03 Å. Es ist jedoch nicht erforderlich, daß der erfindungsgemäße Platin-Aluminium-Katalysator vollständig in der carbidisierten Form vorliegt. Für die Verankerung der Legierungspartikel auf dem Katalysatorträger ist es vielmehr ausreichend, wenn die Platin-Aluminium-Legierung in überwiegend carbidisierter Form vorliegt. Demgemäß kann die meßbare Gitterkontraktion größer als im Falle der vollständig carbidisierten Form von 0,03 Å sein. Es hat sich gezeigt, daß Gitterkontraktionen im Bereich zwischen 0,03 und 0,045 Å eine ausreichende Carbidisierung gewährleisten.

Statt der beschriebenen sequentiellen in situ Abscheidung von Platin und Aluminium auf dem Kohlenstoffträger kann auch nach der Abscheidung des Platins erst ein reiner Platin-Katalysator isoliert werden, auf dem dann nach erneuter Suspendierung in Wasser die Aluminiumkomponente wie schon beschrieben abgeschieden wird. Zur Isolation des Platin-Katalysators wird die reduzierte Katalysatorvorstufe abfiltriert, getrocknet. Nach Abscheidung des Aluminiums wird der Katalysator, wie oben beschrieben, calciniert.

Die aufgefundene Carbidisierung des Platin-Aluminium-Legierungskatalysators führt zu einer besseren Verankerung der Legierungskristallite auf dem Kohlenstoffträger und infolgedessen zu einer höheren Alterungsstabilität des fertigen Katalysators.

Der erfindungsgemäße Platin-Aluminium-Legierungskatalysator kann in vorteilhafter Weise als Basis für die Herstellung von multmetallischen Legierungskatalysatoren der Zusammensetzung

$$Pt_xAl_yL_z/C$$

eingesetzt werden, wobei L mindestens ein weiteres Legierungselement ausgewählt aus den Gruppen VIB, VIIB, VIII und IB des periodischen Systems der Elemente bezeichnet, und das Atomverhältnis von Platin zu Aluminium der Beziehung

$$x : y = 85 : 15 \text{ bis } x : y = 60 : 40$$

genügt. Bei der Präparation des multimetallischen Legierungskatalysators aus dem Platin-Aluminium-Katalysator kann oberflächlich gebundenes Aluminium verlorengehen, so daß z. B. bei dem Grenzverhältnis Pt : Al von 80 : 20 im Ausgangskatalysator sich das Platin-Aluminiumverhältnis im multimetallischen Legierungskatalysator zu Gunsten des Platins auf ein Verhältnis von 85 : 15 verschieben kann.

Das gemeinsame Atomverhältnis von Platin und Aluminium zu den Legierungselementen L sollte der Beziehung

$$(x + y) : z = 85 : 15 \text{ bis } (x + y) : z = 50 : 50$$

genügen.

Diese multimetallischen Legierungskatalysatoren können als Elektrokatalysatoren in Brennstoffzellen verwendet werden. Hierzu ist ein Platingehalt der Katalysatoren bezogen auf das Gesamtgewicht von 5 bis 35 Gew.-% vorteilhaft.

Aus den genannten Gruppen des periodischen Systems der Elemente eignen sich bevorzugt Chrom, Molybdän, Wolfram, Mangan, Eisen, Cobalt, Nickel, Rhodium und Gold für die Herstellung von multimetallischen Katalysatoren.

Diese Legierungselemente werden in einem zweiten Verfahrensschritt auf den schon fertigen Platin-Aluminium-Legierungskatalysator aufgebracht. Hierzu wird der Platin-Aluminium-Legierungskatalysator erneut in Wasser suspendiert und mit einer Lösung von Salzen der gewünschten Legierungselemente versetzt.

Durch Zugabe einer Base wird die Fällung der Legierungselemente in Form der Hydroxide, Oxide oder deren Mischformen eingeleitet. Die vollständige Abscheidung und Fixierung der Legierungselemente wird durch einen Reduktionsschritt abgeschlossen. Hierzu können übliche Reduktionsmittel, wie z. B. Formaldehyd, Formiat (zum Beispiel Natriumformiat), Boronate (zum Beispiel Natriumboronat), Hydrazin usw. verwendet werden. Insbesondere hat sich die Verwendung von Hydrazin bewährt, da so der Reduktionsschritt bereits bei Raumtemperatur durchgeführt werden kann.

Die multimetallische Katalysatorvorstufe wird im Anschluß an die Reduktion von der Reaktionslösung abgetrennt, gewaschen und im Vakuum getrocknet. Die Wäsche kann mit VE-Wasser, verdünnter Ammoniaklösung oder mit anderen Elektrolytzusätzen erfolgen um störende Fremdionen wie z. B. Chloridionen zu entfernen.

Die Überführung der Katalysatorvorstufe in eine geordnete Legierung wird durch eine abschließende Calcinierung unter Inertgas oder einer reduzierenden Atmosphäre bei Temperaturen von bis zu 950°C vorgenommen. Vorteilhafterweise sollte die Temperatur wenigstens 500°C betragen, um ausreichende Diffusiongeschwindigkeiten für die Inkorporation der Legierungselemente in die Platin-Aluminium-Legierungspartikel zu gewährleisten. Die Dauer der Calcination kann je nach Calciniertemperatur bis zu 15 h betragen. Üblicherweise wird die Dauer der Calcination so gewählt, daß keine nennenswerte Vergröberung der Legierungspartikel im Vergleich zum Platin-Aluminium-Katalysator auftritt. Die optimalen Bedingungen für die einzelnen denkbaren Legierungskombinationen können durch Experimentieren herausgefunden werden.

Die multimetallische Platin-Legierung liegt auf dem leitfähigen Kohlenstoffträger in hoch disperser Form mit Kristallitgrößen im Bereich von 3 bis 8 nm, überwiegend zwischen 4 und 7 nm, vor.

Die folgenden Beispiele beschreiben die Herstellung einiger erfindungsgemäßer Katalysatoren. Die Kristallstruktur und die elektrochemischen Leistungsdaten dieser Katalysatoren wurden bestimmt und mit den entsprechenden Daten von Katalysatoren gemäß dem Stand der Technik verglichen.

Die Mengen der Einsatzstoffe (Kohlenstoffträger; Platin- und Aluminiumvorstufen sowie die Vorstufen der weiteren Legierungselemente) wurden entsprechend den gewünschten Atomverhältnissen der Legierungsbestandteile des jeweiligen Katalysators bemessen. Unter Berücksichtigung der Gewichtsanteile der Legierungselemente wurde die Menge der Platinvorstufe in allen Beispielen und Vergleichsbeispielen entsprechend einem Gehalt der fertigen Katalysatoren von 10 Gew.-% Platin angepaßt.

Die durch Analyse an den fertigen Katalysatoren bestimmbaren Atomverhältnisse können von den durch die verwendeten Mengen der Einsatzstoffe eingestellten Atomverhältnissen abweichen. Die Ursache hierfür ist einerseits die Analysengenauigkeit bei den geringen Gewichtsanteilen der Legierungselemente und andererseits die Tatsache, daß ein Teil des Kohlenstoffträgers als Reduktionsmittel für die Legierungsbildung verbraucht wird. So wurden beispielsweise die Mengen der Einsatzstoffe für den Katalysator nach Beispiel B5 für ein Atomverhältnis Pt:Al:Cr = 45:26:29 ausgelegt. Die nachträgliche Analyse des fertigen Katalysators ergab dagegen ein Atomverhältnis von Pt:Al:Cr = 49:21:30. Der Anteil des Aluminiums im fertigen Katalysator wurde offensichtlich durch Ablösung von oberflächlich gebundenem Aluminium während des Zulegierens der weiteren Legierungselemente verringert. Im ungünstigsten Fall wurde eine Verminderung des Aluminiumgehaltes gegenüber dem projektierten Wert von 20 % gemessen.

Die so hergestellten Katalysatoren wurden bezüglich ihrer Röntgenstruktur und ihrer Leistungsdaten bei Anwendung als Kathodenkatalysatoren in einer phosphorsauren Brennstoffzelle charakterisiert. Es zeigen

Figur 1:     Röntgenbeugungsdiagramm eines monometallischen Referenzkatalysators

Figur 2:     Röntgenbeugungsdiagramm eines erfindungsgemäßen Platin-Aluminium-Katalysators (Beispiel 1.2)

Figur 3:     Röntgenbeugungsdiagramm eines Platin-Aluminium-Katalysators nach US 4,186,110 (Vergleichsbeispiel 1)

Figur 4:     Vergleich der Röntgenbeugungsdiagramme eines Platin-Cobalt-Chrom-Katalysators (VB3) und eines Platin-Aluminium-Cobalt-Chrom-Katalysators (Beispiel 3.2)

## Pt/C-Referenzkatalysator

Zum Vergleich der Leistungsdaten der erfindungsgemäßen Katalysatoren mit den Leistungsdaten eines monometallischen Pt/C-Katalysators wurde ein solcher wie folgt hergestellt:

45 g graphitierter Ruß wurden in 1,5 l VE-Wasser suspendiert und die Suspension auf 90°C erwärmt. Die Aktivkomponente Platin wurde dieser Suspension als Lösung von 5 g Pt als Platin(IV)nitrat in einer Portion zugegeben. Nach 15-minütigem Rühren bei 85°C wurde der pH-Wert der Suspension mit Natronlauge auf den Wert 9 eingestellt und für die Dauer von 30 Minuten auf einer Temperatur von 85°C gehalten. Zur Reduktion des auf dem Ruß abgeschiedenen Platins wurden der Suspension 6,8 ml Formaldehyd (37 %ig) zugegeben und die Suspension für weitere 15 Minuten gerührt. Danach wurde die so erhaltene Katalysatorvorstufe abfiltriert, mit Wasser gewaschen und bei 80°C im Vakuum getrocknet. Für die elektrochemische und röntgenologische Charakterisierung wurde der Referenzkatalysator für die Dauer von einer Stunde bei 900°C calciniert.

Der fertige Referenzkatalysator enthielt 10 Gew.-% Platin. Er wird im folgenden mit R bezeichnet.

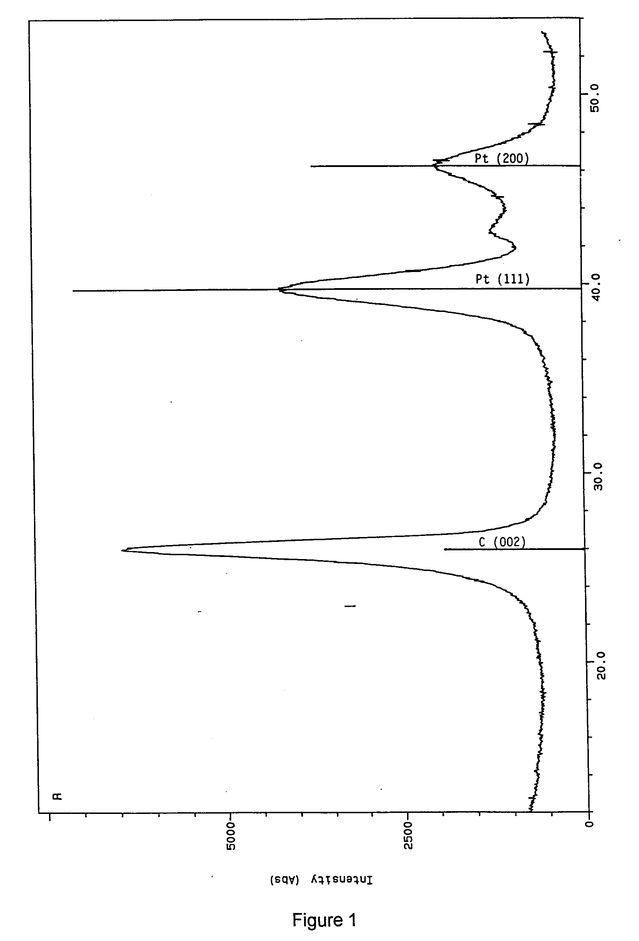

Das Röntgenbeugungsdiagramm dieses Katalysator ist in Figur 1 dargestellt. Es zeigt deutlich die Beugungsreflexe des kubischen Platingitters Pt(111) und Pt(200) mit einer Gitterkonstanten $a_0$ = 3,923 Å sowie den Reflex C(002) des Kohlenstoffträgers. Aus der Halbwertsbreite der Beugungsreflexe ergibt sich eine mittlere Partikelgröße der Platin-Kristallite von d = 4,6 nm.

## Beispiel 1.1

Zur Herstellung eines erfindungsgemäßen Platin-Alumium-Katalysators ($Pt_{75}Al_{25}$) wurde zunächst wie bei der Herstellung des Referenzkatalysators beschrieben 5 g Platin auf 44,77 g graphitiertem Ruß abgeschieden und mit Formaldehyd reduziert. Anschließend wurde die Legierungskomponente Aluminium als Lösung von 0.23 g Al als Aluminiumnitrat in einer Portion zur Suspension gegeben. Nach 15-minütigem Rühren bei 85°C wurde der pH-Wert der Suspension mit verdünnter Ammoniaklösung auf den Wert 7.5 eingestellt und für die Dauer von 15 Minuten auf einer Temperatur von 85°C gehalten. Die Katalysatorvorstufe wurde abgetrennt, gewaschen, bei 80°C im Vakuum getrocknet und abschließend bei 900°C 1 Stunde calciniert.

Die Röntgenbeugungsanalyse ergab, daß eine Legierungsverbindung $Pt_3AlC_{0.5}$ mit einer mittleren Partikelgröße von 5.6 nm vorlag. Die Gitterkonstante betrug 3.892 Å.

## Beispiel 1.2

Es wurde ein weiterer erfindungsgemäßer Katalysator mit einer etwas geänderten Legierungszusammensetzung ($Pt_{63}Al_{37}$) gemäß Beispiel 1.1 hergestellt.

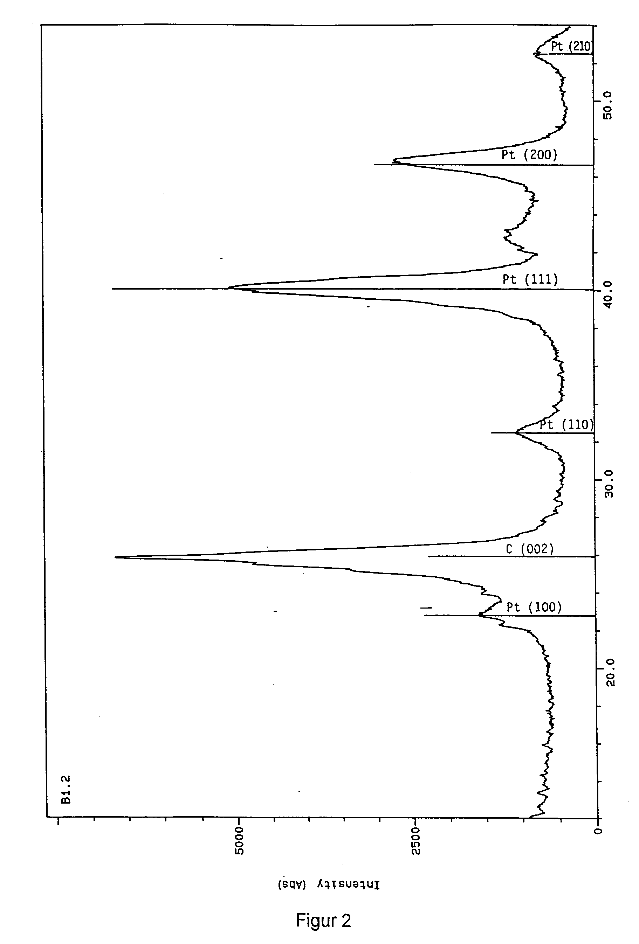

Das Röntgenbeugungsdiagramm dieses Katalysators in Figur 2 weist ebenfalls die Bildung eines Platin-Aluminium-Carbids $Pt_3AlC_{0.5}$ mit einer Gitterkonstanten $a_0 = 3{,}892$ Å und einer mittleren Partikelgröße von 7,2 nm aus.

## Vergleichsbeispiel 1

Es wurde ein Vergleichskatalysator $Pt_{63}Al_{37}$ entsprechend den Beispielen 1 und 3 aus der US-PS 4,186,110 hergestellt. 20 g Referenzkatalysator R mit 10 Gew.-% Platin wurden sorgfältig in 800 ml VE-Wasser mit Ultraschall dispergiert. Als nächstes wurde eine Suspension von 0.54 g $Al_2O_3$-C (Degussa) in 200 ml VE-Wasser hinzugefügt und 0.22 g Aluminiumnitrat als Flockungshilfsmittel zugesetzt. Die Suspension wurde auf 75°C aufgeheizt und 15 Minuten bei dieser Temperatur gehalten, um die Abscheidung des Aluminiumoxids auf dem Platin des Platinkatalysators zu erzielen. Danach wurde die Katalysatorvorstufe abgetrennt, gewaschen, bei 80°C im Vakuum getrocknet und bei 900°C 1 Stunde calciniert.

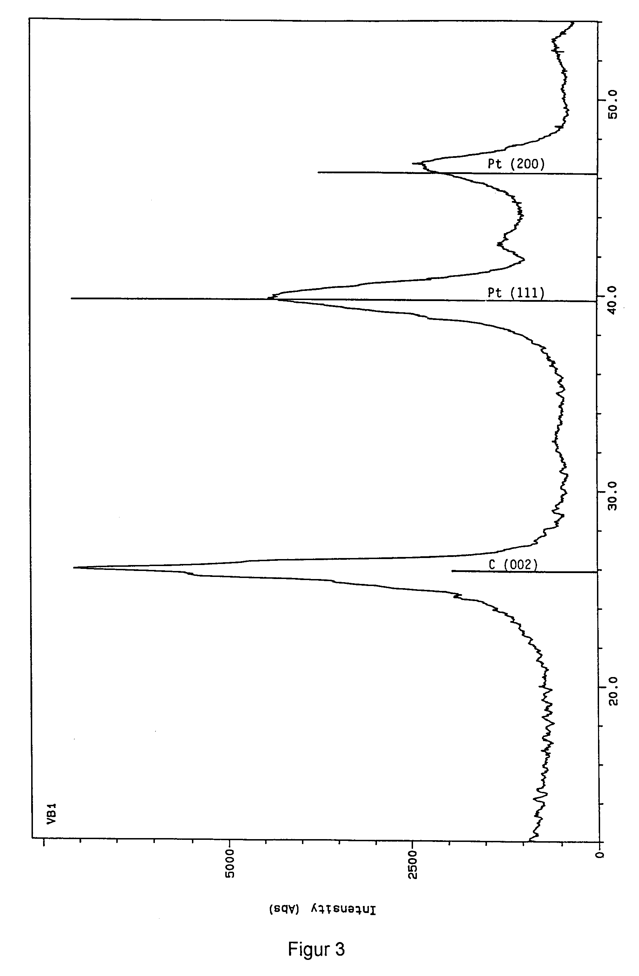

Das Röntgenbeugungsdiagramm dieses Katalysators zeigt Figur 3. Es zeigt überwiegend leicht verschobene Platin-Reflexe. Die charakteristischen Reflexe für $Pt_3AlC_{0.5}$ fehlen. Die Gitterkonstante beträgt 3.913 Å.

## Beispiel 2

Ein $Pt_3AlC_{0.5}$/C-Katalysator nach Beispiel 1.2 mit 9,9 Gew.-% Platin wurde zusätzlich mit Cobalt und Eisen zur Herstellung eines $Pt_{52}Al_{30}Fe_9Co_9$-Katalysators legiert. Hierzu wurden 30 g eines $Pt_3AlC_{0.5}$/C-Katalysators erneut in 900 ml VE-Wasser dispergiert und die Suspension auf 75°C erhitzt. Als nächstes wurden 0,16 g Cobalt in Form von Cobaltnitrat und 0,15 g Eisen in Form von Eisen(III)-Nitrat gelöst in 60 ml VE-Wasser in einem Guß zur Suspension gegeben. Nach 15-minütigem Rühren wurde der pH-Wert der Suspension mit NaOH-Lösung auf den Wert 6.75 eingestellt und für weitere 15 Minuten bei diesem Wert gehalten. Zur Fixierung des Cobalts und Eisens wurden 3 ml Hydrazinhydrat hinzugefügt und nochmals 15 Minuten gerührt. Abschließend wurde der Katalysator abfiltriert, mit verdünnter Ammoniaklösung gewaschen, bei 80°C im Vakuum getrocknet und bei 900°C calciniert.

## Vergleichsbeispiel 2

Der Referenzkatalysator R wurde analog Beispiel 2 mit Cobalt und Eisen legiert. Die Mengen der eingesetzten Cobalt- und Eisenverbindungen wurden so gewählt, daß die Gewichtsanteile von Cobalt und Eisen im Vergleichskatalysator mit den Gewichtsanteilen im Katalysator nach Beispiel 2 übereinstimmten. Dementsprechend führte dies zu einem Katalysator mit der Zusammensetzung $Pt_{74}Co_{13}Fe_{13}$.

## Beispiel 3.1

Ein Katalysator nach Beispiel 1.2 mit einem Platingehalt von 9,9 Gew.-% wurde zur Herstellung eines $Pt_{52}Al_{30}Co_7Cr_{11}$-Katalysators zusätzlich unter Verwendung von Cobalt- und Chromnitrat mit Cobalt und Chrom legiert. Das Legierung wurde wie in Beispiel 2 beschrieben durchgeführt.

## Beispiel 3.2

Zur Herstellung eines weiteren Platin-Aluminium-Cobalt-Chrom-Katalysators mit einem gegenüber Beispiel 3.1 abweichenden Cobalt/Chrom-Verhältnis wurde ein Katalysator nach Beispiel 1.2 zusätzlich mit Cobalt und Chrom legiert. Die Mengen der Einsatzstoffe wurden entsprechend der gewünschten Zusammensetzung $Pt_{45}Al_{26}Co_{17}Cr_{12}$ gewählt.

**Vergleichsbeispiel 3**

Es wurde ein $Pt_{50}Co_{30}Cr_{20}$-Katalysator mit 10 Gew.-% Platin analog zu Beispiel 6 aus der EP 0 450 849 hergestellt.

**Beispiel 4**

Ein $Pt_3AlC_{0.5}$/C-Katalysator mit einem Platingehalt von 10.2 Gew.-% nach Beispiel 1.1 wurde analog zu Beispiel 2 zur Herstellung eines $Pt_{51}Al_{17}Cr_{27}Rh_5$-Katalysators mit Chrom und Rhodium legiert. Hierzu wurden die entsprechenden Nitratverbindungen der beiden Legierungselemente verwendet.

**Vergleichsbeispiel 4**

Der Referenzkatalysator R wurde analog Beispiel 4 zur Herstellung eines $Pt_{68}Cr_{27}Rh_5$-Katalysators mit Chrom und Rhodium legiert. Die Mengen der Einsatzstoffe wurden dabei so gewählt, daß der Aluminium-Anteil des Katalysators nach Beispiel 4 durch Platin ersetzt wurde.

**Beispiel 5**

Ein Katalysator nach Beispiel 1.2 mit einem Platingehalt von 9,9 Gew.-% wurde zur Herstellung ein $Pt_{45}Al_{26}Cr_{29}$-Katalysators zusätzlich mit Chrom legiert.

**Beispiel 6**

Ein Platin-Aluminium-Katalysator nach Beispiel 1.1 mit einem Platingehalt von 10,2 Gew.-% wurde zur Herstellung eines $Pt_{45}Al_{15}Cr_{30}Mn_{10}$-Katalysators zusätzlich mit Chrom und Mangan unter Verwendung der entsprechenden Nitratverbindungen legiert.

**Beispiel 7**

Ein Platin-Aluminium-Katalysator nach Beispiel 1.1 mit einem Platingehalt von 10,2 Gew.-% wurde zur Herstellung eines $Pt_{45}Al_{15}Cr_{30}Fe_{10}$-Katalysators zusätzlich mit Chrom und Eisen unter Verwendung der entsprechenden Nitratverbindungen legiert.

**Beispiel 8**

Ein Platin-Aluminium-Katalysator nach Beispiel 1.1 mit einem Platingehalt von 10,2 Gew.-% wurde zur Herstellung eines $Pt_{45}Al_{15}Cr_{30}Ni_{10}$-Katalysators zusätzlich mit Chrom und Nickel unter Verwendung der entsprechenden Nitratverbindungen legiert.

**Beispiel 9**

Ein Platin-Aluminium-Katalysator nach Beispiel 1.1 mit einem Platingehalt von 10,3 Gew.-% wurde zur Herstellung eines $Pt_{45}Al_{15}Cr_{30} Mo_{10}$-Katalysators zusätzlich mit Chrom und Molybdän unter Verwendung von Kaliummolybdat und Chromnitrat legiert.

**Beispiel 10**

Ein Platin-Aluminium-Katalysator nach Beispiel 1.1 mit einem Platingehalt von 10,4 Gew.-% wurde zur Herstellung eines $Pt_{45}Al_{15}Cr_{30} W_{10}$-Katalysators zusätzlich mit Chrom und Wolfram unter Verwendung von Natriumwolframat und Chromnitrat legiert.

**Beispiel 11**

Ein Platin-Aluminium-Katalysator nach Beispiel 1.1 mit einem Platingehalt von 21,7 Gew.-% wurde zur Herstellung eines $Pt_{45}Al_{15}Cr_{30}W_{10}$-Katalysators zusätzlich mit Chrom und Wolfram unter Verwendung von Natriumwolframat und Chromnitrat legiert.

## Röntgenographische Charakterisierung der Katalysatoren

Von den Katalysatoren und Vergleichskatalysatoren wurden Röntgenbeugungsdiagramme zur Bestimmung der Kristallstruktur, der Gitterkonstante und der mittleren Partikelgrößen aufgenommen. Die Figuren 1 bis 4 zeigen beispielhaft einige Beugungsdiagramme. Tabelle 1 enthält die aus den Beugungsdiagrammen ermittelten Daten.

Die Figuren 1 bis 4 zeigen die Röntgenbeugungsdiagramme einiger Katalysatoren für Beugungswinkel 2Theta von 0 bis 54°. Vertikale Linien kennzeichnen die Lage der Beugungsreflexe der jeweiligen idealen Kristallstruktur. Der Beugungsreflex des graphitierten Rußträgers ist mit C(002) gekennzeichnet. In Figur 1 und 3 sind die Reflexe des Platingitters mit Pt(hkl) markiert. In Figur 2 sind die Reflexe des $Pt_3AlC_{0,5}$ mit P(hkl) angegeben.

Figur 1 ist das Röntgenbeugungsdiagramm des monometallischen Referenzkatalysators R, während Figur 2 das Röntgenbeugungsdiagramm des carbidisierten Platin-Aluminium-Katalysators von Beispiel 1.2 zeigt. Der Vergleich beider Diagramme zeigt, daß das Gitter des reinen Platins sich durch das Zulegieren des Aluminiums und Bildung der carbidischen Phase um 0,03 Å (siehe Tabelle 1) kontrahiert. Die Bildung der carbidischen Phase ist durch das Auftreten und die Lage der Beugungsreflexe eindeutig belegt.

Im Falle einer nicht carbidisierten $Pt_3Al$-Legierung beträgt die Gitterkontraktion 0,06 Å. Je nach Stärke der Carbidisierung ist die Gitterkontraktion des erfindungsgemäßen monometallischen Katalysators größer oder gleich 0,03 Å. Die erfindungsgemäße Verankerung der Legierungspartikel auf dem Kohlenstoffträger durch vollständige oder teilweise Carbidisierung ist noch ausreichend, wenn die Gitterkontraktion maximal 0,045 Å beträgt.

Figur 3 ist das Röntgenbeugungsdiagramm des Vergleichskatalysators von Vergleichsbeispiel 1. Das Diagramm zeigt, daß das in der US 4,186,110 angegebene Herstellverfahren keine ausreichende Legierungsbildung zwischen Platin und Aluminium gewährleistet und auch keine Carbidisierung ermöglicht. Die Gitterkontraktion beträgt nur 0,01 Å gegenüber dem reinen Platin.

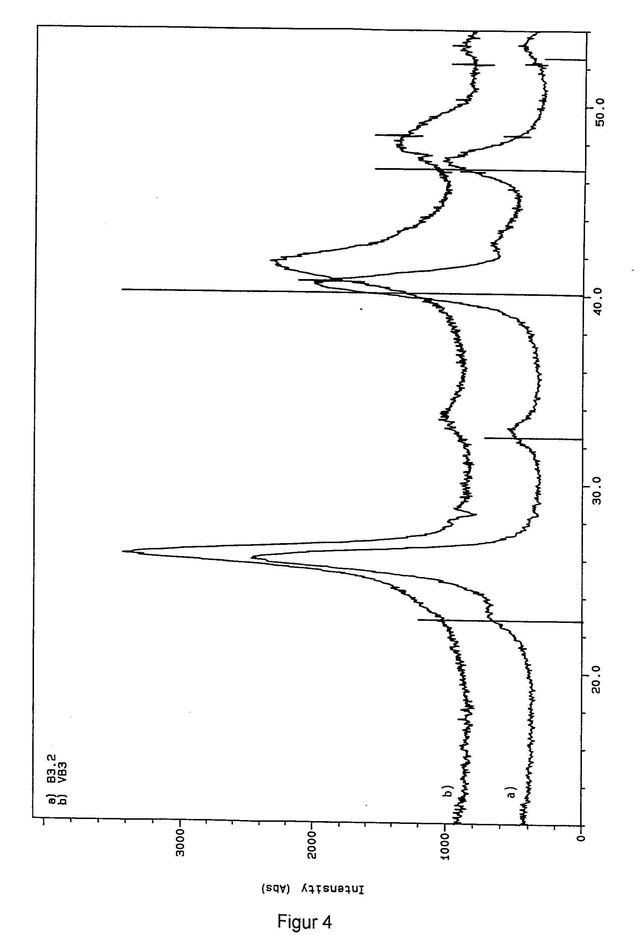

Figur 4 zeigt die Beugungsdiagramme der multimetallischen Katalysatoren nach Beispiel 3.2 (Kurve a) und nach Vergleichsbeispiel 3 (Kurve b). Die Gitterkontraktion des aluminiumfreien Vergleichskatalysators beträgt 0,139 Å, die des erfindungsgemäßen Katalysators aufgrund des Aluminiumgehaltes und der Carbidisierung jedoch nur 0,103 Å.

Tabelle 1

| Gitterkonstante $a_0$ und Partikelgröße d der Katalysatoren | | | |
|---|---|---|---|
| Beispiel | Katalysator auf C | $a_0$ [Å] | d [nm] |
| R | Pt | 3,923 | 4,6 |
| B1.1 | $Pt_{75}Al_{25}$ [1)] | 3,892 | 5,6 |
| B1.2 | $Pt_{63}Al_{37}$ [1)] | 3,892 | 7,2 |
| VB1 | $Pt_{63}Al_{37}$ [2)] | 3,913 | 5,3 |
| B2 | $Pt_{52}Al_{30}Fe_9Co_9$ | 3,852 | 7,0 |
| VB2 | $Pt_{74}Fe_{13}Co_{13}$ | 3,854 | 6,6 |
| B3.1 | $Pt_{52}Al_{30}Co_7Cr_{11}$ | 3,852 | 5,5 |
| B3.2 | $Pt_{45}Al_{26}Co_{17}Cr_{12}$ | 3,820 | 5,5 |
| VB3 | $Pt_{50}Co_{30}Cr_{20}$ | 3,784 | 5,6 |
| B4 | $Pt_{51}Al_{17}Cr_{27}Rh_5$ | 3,845 | 7,2 |
| VB4 | $Pt_{68}Cr_{27}Rh_5$ | 3,859 | 6,3 |
| B5 | $Pt_{45}Al_{26}Cr_{29}$ | 3,854 | 6,9 |
| B6 | $Pt_{45}Al_{15}Cr_{30}Mn_{10}$ | 3,835 | 6,8 |
| B7 | $Pt_{45}Al_{15}Cr_{30}Fe_{10}$ | 3,833 | 6,7 |
| B8 | $Pt_{45}Al_{15}Cr_{30}Ni_{10}$ | 3,837 | 5,9 |
| B9 | $Pt_{45}Al_{15}Cr_{30}Mo_{10}$ | 3,845 | 6,8 |
| B10 | $Pt_{45}Al_{15}Cr_{30}W_{10}$ | 3,845 | 6,5 |

1) Röntgenstruktur: Platin-Aluminium-Carbid $Pt_3AlC_{0,5}$

2) Röntgenstruktur: kein Platin-Aluminium-Carbid

**Elektrochemische Charakterisierung der Katalysatoren**

Zur Bestimmung ihrer elektrochemischen Eigenschaften wurden die Katalysatoren der vorstehenden Beispiele zu Gasdiffusionselektroden mit einem PTFE-Gehalt (PTFE: Polytetrafluorethylen) von 30 Gew.-% verarbeitet. Hierzu wurden die Katalysatoren in bekannter Weise in einer Suspension von PTFE dispergiert. Mit der resultierenden Suspension wurde ein mit PTFE hydrophobiertes Graphitpapier beschichtet und die Beschichtung abschließend bei 340° C gesintert. Die Beschichtung wurde so eingestellt, daß der Platingehalt der fertigen Elektrode etwa 0,5 mg Pt/cm$^2$ betrug.

Ein jeweils 2 Quadratzentimeter großes Stück der so hergestellten Elektroden wurde in einer elektrochemischen Halbzelle gegen eine dynamische Wasserstoffelektrode (DHE: Dynamic Hydrogen Electrode) in 103 %iger Phosphorsäure bei einer Betriebstemperatur von 190° C bezüglich ihrer Fähigkeit, Sauerstoff zu reduzieren, untersucht.

Als Kenndaten wurden hierfür die sogenannte Sauerstoff-Massenaktivität und das Potential bei einem Stromfluß durch die Brennstoffzelle von 200 mA/mg Pt gemessen. Die Sauerstoff-Massenaktivität ist definiert als der sich bei einem Potential von 0,9 V einstellende Strom, bezogen auf die Menge Platin der Elektrode, gemessen in mA/mg Pt. Bei der Bestimmung beider Kenndaten diente Sauerstoff als Reaktant. Bei den angegebenen Potentialen handelt es sich um Werte, die zur Elimination des Innenwiderstandes der elektrochemischen Zelle korrigiert wurden.

Beide Kenndaten wurden jeweils erst nach einer 3-stündigen Anfahrphase gemessen. Während der Anfahrphase befand sich die elektrochemische Halbzelle auf Betriebstemperatur von 190° C, jedoch blieb der Stromkreis während dieser Phase geöffnet, so daß kein Strom fließen konnte. Zur Bestimmung der Alterungsstabilität wurde das Potential bei 200 mA/mg Pt nach einer zusätzlichen Alterung von 19 Stunden bestimmt. Ein Maß für die Alterungsstabilität ergibt sich aus der Differenz Δ des Potentials bei 200 mA/mg Pt nach 3 Stunden und nach 22 Stunden. Die Betriebsbedingungen während der Alterung entsprachen den Bedingungen während der Anfahrphase. Die Ergebnisse dieser Messungen sind in der folgenden Tabelle 2 aufgelistet. Bei den Werten für den frischen Zustand handelt es sich um die Meßwerte nach der Anfahrphase.

Die aluminiumhaltigen Platin-Legierungskatalysatoren zeichnen sich im Vergleich zu den entsprechenden aluminiumfreien Katalysatoren durch eine erhöhte Alterungsstabilität aus. Gegenüber dem Vergleichskatalysator VB3, der den jüngeren Stand der Technik repräsentiert, weisen bestimmte Platin-Aluminium-Legierungskombinationen eine erhöhte Anfangsaktivität auf. Durch diese erhöhte Anfangsaktivität in Verbindung mit dem guten Alterungsverhalten können solche Elektrodenkatalysatoren vorteilhaft in phosphorsauren Brennstoffzellen eingesetzt werden. Ebenso können diese Katalysatoren erfahrungsgemäß auch erfolgreich in Polymer-Elektrolyt-Brennstoffzellen verwendet werden.

Tabelle 2

| Elektrochemische Leistungsdaten der Katalysatoren | | | | | | |
|---|---|---|---|---|---|---|
| Beispiele | Katalysator auf C | $O_2$-Massenaktivität bei 0,9 V [mA/mg Pt] | | Potential bei 200 mA/mg Pt [mV] | | |
| | | 3h | 22h | 3h | 22h | $\Delta$ |
| R | Pt | 58 | 28 | 852 | 784 | 68 |
| B1.1 | $Pt_{71}Al_{29}$ [1] | 54 | 35 | 838 | 790 | 48 |
| B1.2 | $Pt_{63}Al_{37}$ [1] | 75 | 40 | 851 | 793 | 58 |
| VB1 | $Pt_{63}Al_{37}$ [2] | 40 | 19 | 809 | 744 | 65 |
| B2 | $Pt_{52}Al_{30}Fe_9Co_9$ | 69 | 51 | 855 | 814 | 41 |
| VB2 | $Pt_{74}Fe_{13}Co_{13}$ | 62 | 27 | 847 | 759 | 88 |
| B3.1 | $Pt_{52}Al_{30}Co_7Cr_{11}$ | 73 | 61 | 861 | 848 | 13 |
| B3.2 | $Pt_{45}Al_{26}Co_{17}Cr_{12}$ | 79 | 62 | 861 | 843 | 18 |
| VB3 | $Pt_{50}Co_{30}Cr_{20}$ | 71 | 44 | 853 | 828 | 25 |
| B4 | $Pt_{51}Al_{17}Cr_{27}Rh_5$ | 64 | 61 | 846 | 848 | -2 |
| VB4 | $Pt_{68}Cr_{27}Rh_5$ | 76 | 50 | 854 | 822 | 32 |
| B5 | $Pt_{45}Al_{26}Cr_{29}$ | 63 | 56 | 848 | 842 | 6 |
| B6 | $Pt_{45}Al_{15}Cr_{30}Mn_{10}$ | 66 | 49 | 852 | 835 | 17 |
| B7 | $Pt_{45}Al_{15}Cr_{30}Fe_{10}$ | 60 | 53 | 854 | 845 | 9 |
| B8 | $Pt_{45}Al_{15}Cr_{30}Ni_{10}$ | 66 | 54 | 851 | 837 | 14 |
| B9 | $Pt_{45}Al_{15}Cr_{30}Mo_{10}$ | 79 | 65 | 856 | 848 | 8 |
| B10 | $Pt_{45}Al_{15}Cr_{30}W_{10}$ | 86 | 72 | 862 | 855 | 7 |
| B11[3] | $Pt_{45}Al_{15}Cr_{30}W_{10}$ | 57 | 60 | 846 | 844 | 2 |

1) Röntgenstruktur: Platin-Aluminium-Carbid $Pt_3AlC_{0,5}$
2) Röntgenstruktur: kein Platin-Aluminium-Carbid
3) Katalysator mit 20 Gew.-% Platin

**Patentansprüche**

1. Platin-Aluminium-Legierungskatalysator auf einem leitfähigen Kohlenstoffträger,
**dadurch gekennzeichnet,**
daß das Atomverhältnis von Platin zu Aluminium zwischen 80 : 20 und 60 : 40 liegt und daß die Legierungspartikel auf dem Kohlenstoffträger in carbidisierter Form mit der Struktur des Platin-Aluminium-Carbids $Pt_3AlC_{0,5}$ vorliegen.

2. Platin-Aluminium-Legierungskatalysator nach Anspruch 1, **dadurch gekennzeichnet,**
daß er eine Gitterkontraktion gegenüber dem reinen Platin von 0,03 bis 0,045 Å aufweist.

3. Platin-Aluminium-Legierungskatalysator auf einem leitfähigen Kohlenstoffträger enthaltend eine Platin Aluminiumlegierung mit mindestens einem weiteren Legierungselement L,
**dadurch gekennzeichnet,**
daß die Legierung eine Zusammensetzung gemäß der Formel

$$Pt_xAl_yL_z$$

aufweist, wobei L wenigstens ein Element ausgewählt aus den Gruppen VIB, VIIB, VIII und IB des periodischen Systems der Elemente ist und das Atomverhältnis von Platin zu Aluminium der Beziehung

$$x:y = 85:15 \text{ bis } x:y = 60:40$$

genügt.

4. Katalysator nach Anspruch 3,
   **dadurch gekennzeichnet**,
   daß das gemeinsame Atomverhältnis von Platin und Aluminium zu den Legierungselementen L der Beziehung

$$(x+y):z = 85:15 \text{ bis } (x+y):z = 50:50$$

genügt.

5. Katalysator nach Anspruch 3 oder 4,
   **dadurch gekennzeichnet,**
   daß der Platingehalt des Katalysators bezogen auf sein Gesamtgewicht 5 bis 35 Gew.-% beträgt.

6. Katalysator nach einem der Ansprüche 3 bis 5,
   **dadurch gekennzeichnet**,
   daß die Legierungselemente L ausgewählt sind aus der Gruppe Chrom, Molybdän, Wolfram, Mangan, Eisen, Cobalt,Nickel, Rhodium und Gold.

7. Katalysator nach einem der vorstehenden Ansprüche 3 bis 6,
   **dadurch gekennzeichnet**,
   daß die Größe der Legierungspartikel auf dem leitfähigen Kohlenstoffträger zwischen 3 und 8 nm, bevorzugt zwischen 4 und 7 nm liegt.

8. Verfahren zur Herstellung eines Katalysators nach einem der vorstehenden Ansprüche 3 bis 7 durch Suspendieren des leitfähigen Kohlenstoffträgers in Wasser, Mischen dieser Suspension mit wäßrigen Lösungen der Legierungskomponenten, Abscheiden der Legierungskomponenten durch Zugabe von Basen, Filtrieren, Waschen, Trocknen und Calcinieren des Katalysators bei Temperaturen von 200 bis 950°C,
   **dadurch gekennzeichnet**,
   daß in einer ersten Verfahrensstufe zunächst ein Platin-Aluminium-Legierungskatalysator durch sequentielles Abscheiden von Platin und Aluminium mit anschließender Calcinieren bei mehr als 200°C hergestellt wird, welcher in einer zweiten Verfahrensstufe durch Abscheiden der weiteren Legierungskomponenten und Calcinieren bei Temperaturen zwischen 500 und 950°C mit diesen Komponenten dotiert wird.

9. Verwendung der Katalysatoren nach den Ansprüchen 1 bis 7 als Elektrokatalysatoren in phosphorsauren Brennstoffzellen (PAFC) oder in Polymer-Elektrolyt-Membran Brennstoffzellen (PEMFC).

**Claims**

1. A platinum/aluminium alloy catalyst on a conductive carbon support,
   characterised in that
   the atomic ratio of platinum to aluminium is between 80 : 20 and 60 : 40 and that the alloy particles are present on the carbon support in the carbidised form with the structure of platinum aluminium carbide $Pt_3AlC_{0.5}$.

2. A platinum/aluminium alloy catalyst according to Claim 1,
   characterised in that
   it has a lattice contraction of 0.03 to 0.04 A as compared with pure platinum.

3. A platinum/aluminium alloy catalyst on a conductive carbon support containing a platinum/aluminium alloy with at least one further alloy element L,
   characterised in that
   the alloy has a composition in accordance with the formula

$$Pt_xAl_yL_z$$

wherein L is at least one element selected from groups VIB, VIIB, VIII and IB of the Periodic System of Elements and the atomic ratio of platinum to aluminium satisfies the equation

$$x{:}y = 85{:}15 \text{ to } x{:}y = 60{:}40.$$

4. A catalyst according to Claim 3,
characterised in that
the atomic ratio of the sum of platinum and aluminium to the alloy element L satisfies the equation

$$(x+y){:}z = 85{:}15 \text{ to } (x+y){:}z = 50{:}50.$$

5. A catalyst according to Claim 3 or 4,
characterised in that
the platinum content of the catalyst is 5 to 35 wt.%, with respect to the total weight of catalyst.

6. A catalyst according to one of Claims 3 to 5, characterised in that
the alloy element L is selected from the group chromium, molybdenum, tungsten, manganese, iron, cobalt, nickel, rhodium and gold.

7. A catalyst according to one of the preceding Claims 3 to 6
characterised in that
the size of the alloy particles on the conductive support is between 3 and 8 nm, preferably between 4 and 7 nm.

8. A process for preparing a catalyst according to one of the preceding Claims 3 to 7 by suspending the conductive carbon support in water, mixing this suspension with aqueous solutions of the alloy components, depositing the alloy components by adding bases, filtering, washing, drying and calcining the catalyst at temperatures of 200 to 950°C,
characterised in that
in a first process step, a platinum/aluminium alloy is first prepared by sequentially depositing platinum and aluminium and then calcining at more than 200°C, and that this is then doped with other alloy components in a second process step by depositing these components and calcining at temperatures between 500 and 950°C.

9. Use of catalysts according to Claims 1 to 7 as electrocatalysts in phosphoric acid fuel cells (PAFCs)or in polymer/electrolyte/membrane fuel cells (PEMFCs).

## Revendications

1. Catalyseur en alliage de platine-aluminium sur un support carboné conducteur,
caractérisé en ce que
le rapport atomique du platine à l'aluminium se situe entre 80:20 et 60:40 et en ce que les particules d'alliage se présentent sur le support carboné sous forme carburée avec la structure du carbure de platine-aluminium $Pt_3AlC_{0,5}$.

2. Catalyseur en alliage de platine-aluminium selon la revendication 1,
caractérisé en ce qu'
il présente une contraction de réseau par rapport au platine pur de 0,03 à 0,045 Å.

3. Catalyseur en alliage de platine-aluminium sur un support carboné conducteur contenant un alliage de platine-aluminium avec au moins un autre élément d'alliage L, caractérisé en ce que l'alliage présente une composition conforme à la formule

$$Pt_xAl_yL_z$$

dans laquelle L est au moins un élément choisi parmi les groupes VIB, VIIB, VIII et IB de la classification périodique des éléments et le rapport atomique du platine à l'aluminium satisfait à la relation

$$x{:}y = 85{:}15 \text{ à } x{:}y = 60{:}40.$$

4. Catalyseur selon la revendication 3,

caractérisé en ce que
le rapport atomique commun du platine et de l'aluminium aux éléments d'alliage L satisfait à la relation

$$(x+y){:}z = 85{:}15 \ \text{à} \ (x+y){:}z = 50{:}50.$$

5. Catalyseur selon la revendication 3 ou 4,
caractérisé en ce que
la teneur en platine du catalyseur s'élève à 5 à 35% en poids par rapport à son poids total.

6. Catalyseur selon l'une des revendications 3 à 5, caractérisé en ce que
les éléments d'alliage L sont choisis dans le groupe constitué par le chrome, le molybdène, le tungstène, le manganèse, le fer, le cobalt, le nickel, le rhodium et l'or.

7. Catalyseur selon l'une des revendications 3 à 6 précédentes,
caractérisé en ce que
la taille des particules de l'alliage sur le support carboné conducteur se situe entre 3 et 8 nm, de préférence entre 4 et 7 nm.

8. Procédé de fabrication d'un catalyseur selon l'une des revendications 3 à 7 précédentes par mise en suspension du support carboné conducteur dans l'eau, mélange de cette suspension avec des solutions aqueuses des composants de l'alliage, dépôt des composants de l'alliage par addition de bases, filtration, lavage, séchage et calcination du catalyseur à des températures de 200 à 950°C, caractérisé en ce qu'

- on produit tout d'abord dans une première étape du procédé un catalyseur en alliage de platine-aluminium par dépôt successif de platine et d'aluminium suivi par une calcination à plus de 200°C,
- on dope dans une seconde étape du procédé par dépôt des autres composants de l'alliage et calcination à des températures comprises entre 500 et 950°C avec ces composants.

9. Utilisation des catalyseurs selon les revendications 1 à 7 comme électrocatalyseurs dans des piles à combustible à l'acide phosphorique (PAFC) ou dans des piles à combustible à membrane d'électrolyte polymère (PEMFC).

Figure 1

Figur 2

Figur 3

Figur 4